# EUROPÄISCHE PATENTSCHRIFT

(11) **EP 0 521 502 B1**
(45) Veröffentlichungstag und Bekanntmachung des Hinweises auf die Patenterteilung: **04.11.1998**
(21) Anmeldenummer: 92111214.0
(22) Anmeldetag: 02.07.1992
(51) Int. Cl.: G06K 19/077

(54) **Verfahren zum Einbau eines Trägerelements**
Procedure for setting-in a carrier member
Procédé pour l'installation d'un support

(30) Priorität: 03.07.1991 DE 4122049
(43) Veröffentlichungstag der Anmeldung: 07.01.1993
(73) Patentinhaber: GAO Gesellschaft für Automation und Organisation mbH, 81307 München (DE)
(72) Erfinder: Haghiri-Tehrani, Yahya, 80797 München (DE); Barak, Renée-Lucia, 82008 Unterhaching (DE)
(74) Vertreter: Klunker . Schmitt-Nilson . Hirsch

(56) Entgegenhaltungen:
- EP-A- 0 107 061
- EP-A- 0 299 530
- US-A- 4 746 392

## Beschreibung

Die Erfindung betrifft ein Verfahren zum Einbau eines Trägerelements in einen Kartenkörper gemäß dem Oberbegriff des Anspruchs 1 sowie ein Halbzeug in Form eines Kartenkörpers.

Bei der Herstellung von Ausweiskarten, die als Identifikations-, Kredit- oder Buchungskarten oder dergleichen verwendet werden, wird beispielsweise in einer zur Aufnahme eines Moduls oder Trägerelements vorgesehenen Aussparung der Karte das Trägerelement mit dem Kartenkörper verbunden. Eine Möglichkeit besteht beispielsweise darin, ein Trägerlement oder ein Modul mit Hilfe einer Kleberschicht dauerhaft mit dem Kartenkörper zu verbinden.

Aus der EP-A 0 334 733 ist beispielsweise ein Verfahren zum Einbringen eines elektronischen Moduls in die Aussparung eines Kartenkörpers bekannt. Bei dem dort vorgeschlagenen Verfahren ist in einen Bereich einer zweistufigen Aussparung ein Fixierring aus thermoaktivierbaren Klebstoff eingebracht. Die Verklebung des Moduls mit dem Kartenkörper erfolgt durch Anwendung von Hitze.

Bei den bekannten Verfahren zum Einbau eines Trägerelementes oder eines Modules in einen Kartenkörper werden vorzugsweise Heißsiegelkleber oder Haftkleber verwendet. Der Heißsiegelkleber muß im Unterschied zum Haftkleber thermisch aktiviert werden, d. h. eine Verbindung der Komponenten kann nur unter Einwirkung von Wärme erfolgen. Die notwendige Wärme kann dem Heißsiegelkleber beispielsweise über geeignete Hitzestempel zugeführt werden. Der Haftkleber bietet gegenüber dem Heißsiegelkleber den Vorteil, daß eine gute und dauerhafte Verbindung auch ohne Einwirkung von Wärme möglich ist. Dadurch, daß der Haftkleber bereits bei Normaltemperatur klebend ist, wird jedoch die Handhabung während den Verfahrensschritten erschwert, beispielsweise kann der Haftkleber in unerwünschter Weise mit den Maschinenteilen verkleben.

Die Module oder Trägerelemente, die vorzugsweise aus einem Endlosfilm ausgestanzt werden, bestehen im allgemeinen aus einem Substrat, auf dem ein oder mehrere integrierte Schaltkreise mit Leiterbahnen verbunden sind. Die Leiterbahnen führen zu auf dem Substrat befindlichen Kontaktflächen, die die Kommunikation mit entsprechenden Geräten ermöglichen. Der IC-Baustein und die vom IC-Baustein zu den Kontaktflächen führenden Leiterbahnen können zum Schutz vor mechanischen Belastungen von einer Gußmasse umgeben werden.

Stellvertretend für die vielen bereits bekannten Verfahren zum Einbau eines Trägerelements oder eines Modules in einen Kartenkörper sei das aus der EP-A 0 201 952 bekannte Verfahren genannt. Bei diesem Verfahren wird ein Trägerelement oder ein Modul mit Hilfe eines auf dem Trägerelement angeordneten Haftklebers in einer Aussparung der Karte mit dem Kartenkörper verbunden. Die Verfahrensschritte sind folgende. In ein Haftklebeband, bestehend aus einem doppelseitigen Haftkleberfilm, der auf jeder Seite von einer Schutzfolie bedeckt ist, werden kreisförmige Öffnungen gestanzt. Das mit den Öffnungen versehene Haftklebeband wird mit einem Trägerfilm, auf dem die integrierten Schaltkreise montiert sind, zusammengeführt und mit diesem nach Entfernen einer ersten Schutzfolie verbunden. Der Trägerfilm wird mit einer Schutzschicht besprüht, wobei der von einer zweiten Schutzfolie bedeckte Haftkleberfilm eine Maske bildet, die die nicht zu besprühenden Bereiche abdeckt. Vor dem Ausstanzen der Trägerelemente mit den dazu entsprechenden Haftkleberringen wird die zweite Schutzfolie entfernt. In einem zusätzlichen Arbeitsschritt mit der mit dem Trägerfilm verbundene Haftkleberfilm mit einer dritten Schutzfolie zusammengeführt und verbunden. Der Haftkleberfilm wird dabei von der dritten Schutzfolie derart bedeckt, daß beim Austanzen der Trägerelemente, die zum Verbinden der Trägerelemente mit den Kartenkörpern vorgesehenen Haftkleberringe nicht bedeckt werden. Die dritte Schutzfolie verhindert, daß beim Ausstanzen der Trägerelemente der Haftkleberfilm mit dem Kartenkörper oder auch mit der Matrize des Stanzwerkzeuges verkleben kann.

Das Verfahren hat den Nachteil, daß das Zusammenführen bzw. Verbinden der zusätzlich verwendeten dritten Schutzfolie mit dem Haftkleberfilm eine sehr genaue Positionierung erfordert, damit die Klebeflächen der Haftkleberringe von der Schutzfolie nicht bedeckt werden. Des weieren hat das bekannte Verfahren auch den Nachteil, daß infolge der zusätzlich aufgebrachten dritten Schutzfolie ein Abstand zwischen der Patrize und Matrize beim Ausstanzen der Trägerelemente entsteht, wodurch unscharfe Kanten beim Stanzvorgang erhalten werden. Dies kann beispielsweise zu unscharfen Stanzkonturen führen.

Der Erfindung liegt die Aufgabe zugrunde, den Einbau eines Trägerelementes in einen Kartenkörper zu erleichtern, wobei gleichzeitig eine gute und dauerhafte Verbindung des Trägerelementes mit dem Kartenkörper erhalten wird.

Die Aufgabe wird erfindungsgemäß durch die in den Ansprüchen 1 und 8 angegebenen Merkmale gelöst.

Bei der Erfindung wird von einem in Endlosform vorliegenden Trägerfilm mit darauf montierten integrierten Schaltkreisen ausgegangen, wobei die Schaltkreise jeweils von einer Gußmasse umgeben sein können. Aus dem Trägerfilm werden mit einem geeigneten Stanzwerkzeug die Trägerelemente ausgestanzt und in einen mit einer Aussparung versehenen Kartenkörper eingebaut. Vor dem Einbau der Trägerelemente wird auf den für die Verbindung mit dem Modul vorgesehenen Flächen der Aussparung ein doppelseitig klebendes Haftkleberelement mittels eines geeigneten Werkzeugs aufgebracht. Mit Hilfe des Haftkleberelements kann das Trägerelement unter der Einwirkung von Druck fest und dauerhaft mit dem Kartenkörper verbunden werden.

Bei dem erfindungsgemäßen Verfahren zum Einbau eines Trägerelements wird zuerst das Haftkleberelement und anschließend das Trägerelement in die dafür vorgesehene Aussparung des Kartenkörpers eingebaut. Dadurch können das Haftklebeband und der Trägerfilm unabhängig voneinander bearbeitet werden. Die Trägerelemente können demzufolge ohne den Haftkleberfilm aus dem Trägerfilm ausgestanzt werden. Dies hat den Vorteil, daß ein unerwünschtes Verkleben des Haftkleberfilms mit dem Stanzwerkzeug während des Stanzvorgangs ausgeschlossen werden kann. Nach Entfernen der Schutzfolie wird der auf einer Trägerfolie befindliche Haftkleberfilm in einem separaten Verfahrensschritt mittels eines geeigneten Schneidwerkzeuges bearbeitet, um die einzelnen zum Verbinden der Trägerelemente mit dem Kartenkörpern vorgesehenen Haftkleberelemente zu erhalten. Diese Vorgehensweise erleichtert die Handhabung des Haftklebebandes bei den Verfahrensschritten. In einem nächsten Arbeitsschritt können die Haftkleberelemente problemlos mittels eines geeigneten Werkzeugs von der Trägerfolie direkt und paßgenau in die Aussparung transferiert werden. Somit ermöglicht das erfindungsgemäße Verfahren einen einfachen und problemlosen Einbau der Trägerelemente in die Kartenkörper.

Die zum Verbinden der Trägerelemente mit den Kartenkörpern vorgesehenen Haftkleberelemente werden aus einem in Form von Endlosmaterial vorliegenden Haftklebeband, das aus einer Trägerfolie mit einem darauf befindlichen doppelseitigen Haftkleberfilm besteht, der von mindestens einer Schutzfolie bedeckt wird, gemäß dem erfindungsgemäßen Verfahren in folgender Weise hergestellt. Gemäß einer ersten Ausführungsform werden die zum Verbinden der Trägerelemente mit den Kartenkörpern als Klebeflächen nicht benötigten Bereiche des Haftklebebandes mittels eines Stanzwerkzeuges ausgestanzt. Nach Entfernen der Schutzfolie wird mit Hilfe eines geeigneten Schneidwerkzeuges der Haftkleberfilm in regelmäßigen Abständen registergenau, d. h. entsprechend den Abmaßen der für die Verbindung der Trägerelemente mit den Kartenkörpern vorgesehenen Klebeflächen, durchtrennt, um die einzelnen Haftkleberelemente zu erhalten. Bei einer zweiten Ausführungsform wird zunächst eine Schutzfolie vom Haftkleberband entfernt und der Haftkleberfilm entsprechend der für die Haftkleberelemente gewählten Kontur derart durchtrennt, daß die Elemente von einem Gitter umgeben sind. Im nächsten Arbeitsschritt wird der gitterförmige Haftkleberfilm abgezogen, um die auf der Trägerfolie in regelmäßigen Abständen isoliert verbleibenden Haftkleberelemente zu erhalten. Obwohl diese Ausführungsform in der Herstellung gegenüber der ersten Ausführungsform aufwendiger ist, hat sie jedoch den Vorteil, daß sie einen einfacheren Einbau der Haftkleberelemente in die Kartenkörper ermöglicht. Gemäß einer Weiterbildung der zweiten Ausführungsform kann die Trägerfolie des Haftklebebandes zusätzlich auch mit T-förmigen Aussparungen versehen werden. Diese Ausführung hat den zusätzlichen Vorteil, daß die Haftkleberelemente in tiefere Kartenhohlräume eingesetzt werden können, ohne daß durch starke Faltenbildung der Trägerfolie an den Enden des Hohlraumes Verarbeitungsprobleme entstehen können. Diese Ausführungsform ist insbesondere bei IC-Modulen mit dickerem Randbereich und bei plattenförmigen IC-Modulen vorteilhaft.

Die Haftkleberelemente können mit Hilfe eines geeigneten Stanzwerkzeugs auch gemeinsam mit der Trägerfolie als Schutzschicht in eine Kartenaussparung eingesetzt werden.

Gemäß einer weiteren Ausführungsform der Erfindung ist die mehrstufige Aussparung eines mit transparenten Deckschichten versehenen Kartenkörpers so ausgelegt, daß der in die rückseitige transparente Schicht ragende Boden der Aussparung durch ein auf der Rückseite des Kartenkörpers plaziertes abdeckendes Element, beispielsweise durch einen sogenannten Unterschriftsstreifen, nicht sichtbar ist.

Weitere Vorteile und Weiterbildungen der Erfindung ergeben sich aus den Unteransprüchen sowie den Ausführungsbeispielen, die nachfolgend anhand der Figuren beschrieben werden. Darin zeigen:
- Fig. 1: einen Kartenkörper mit eingebautem Haftkleberelement und einzubauendem Trägerelement im Schnitt,
- Fig. 2 - 3: ein Verfahren zum Einbau eines Trägerelements in einen Kartenkörper,
- Fig. 4: eine weitere Ausführungsform eines Haftklebebandes,
- Fig. 5: eine Weiterbildung des in Fig. 4 dargestellten Haftklebebandes,
- Fig. 6: ein Stanzwerkzeug zum Einbau eines Haftkleberelements mit Schutzfolie in den Kartenkörper,
- Fig. 7: Schnitt durch einen Kartenkörper,
- Fig. 8: den Kartenkörper aus Fig. 7 in Aufsicht.

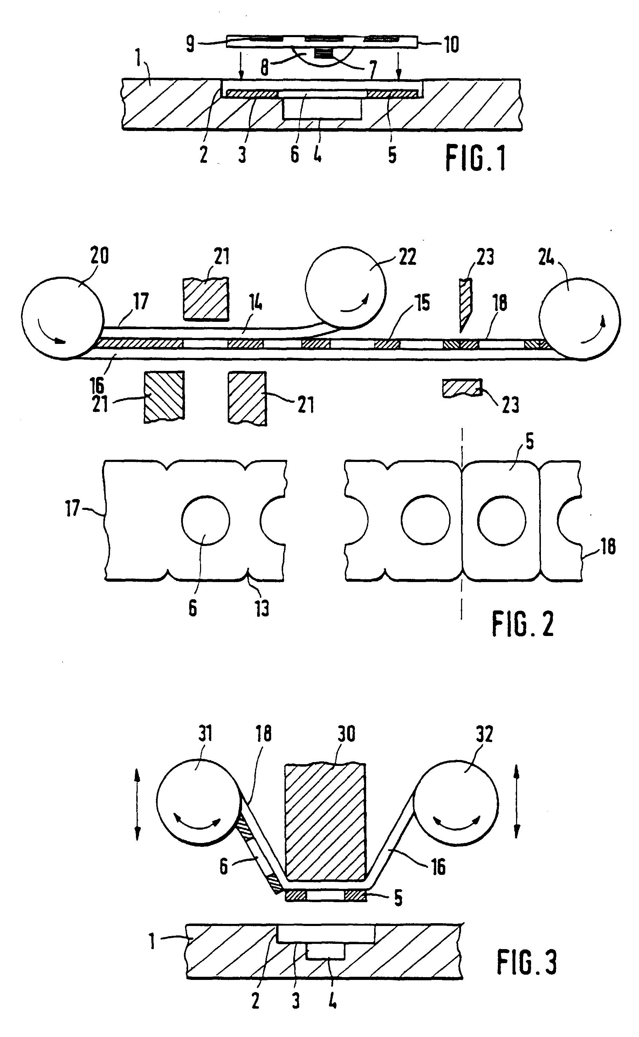

Fig. 1 zeigt in einer Schnittdarstellung einen Kartenkörper 1 mit einer Aussparung 2. Die Aussparung 2 ist in einer bevorzugten Ausführungsform als zweistufige Aussparung ausgeführt, die eine erste Aussparung 3 und eine innerhalb der ersten Aussparung 3 angeordnete tiefere zweite Aussparung 4 aufweist. Auf den Schulterbereichen der tieferen Aussparung 4 ist ein doppelseitig klebendes Haftkleberelement 5, das mit einer Öffnung 6 versehen ist, angeordnet. Der Kartenkörper 1 kann aus einer einzigen oder auch aus mehreren Schichten aufgebaut sein. Die Aussparung 2 kann beispielsweise bei einer Monoschichtkarte in den Kartenkörper 1 mit einem entsprechenden Werkzeug hineingefräst werden. Die Aussparung 2 dient zur Aufnahme eines Trägerelements 10, wobei die erste Aussparung 3 zur Aufnahme des Substrats dient und die zweite Aussparung 4 für die Aufnahme des integrierten Schaltkreises 7 vorgesehen ist. Das Trägerelement 10 besteht aus einem Substrat, auf dem ein integrierter Schaltkreis 7 angeordnet ist. Zum Schutz vor mechanischen Belastungen kann der integrierte Schaltkreis 7 von einer Gußmasse 8, beispielsweise einem Gießharz, umgeben sein. Der integrierte Schaltkreis 7 ist über Leiterbahnen oder Bonddrähte (nicht dargestellt) mit den auf dem Substrat befindlichen Kontaktflächen 9 verbunden.

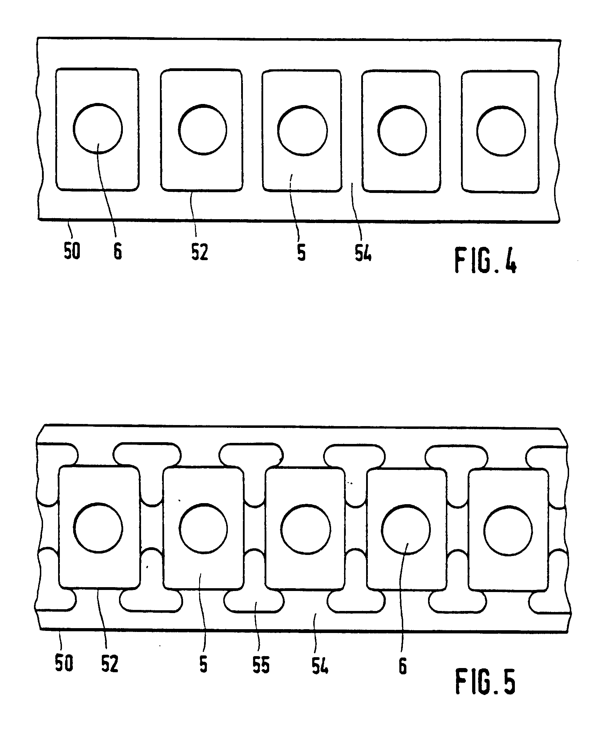

Anhand der Fig. 2 und 3 soll nachfolgend das erfindungsgemäße Verfahren zum Einbau des Trägerelements 10 in die Aussparung 2 des Kartenkörpers 1 erläutert werden. Die Fig. 2 zeigt ein von einer Rolle 20 abgespultes in Endlosform vorliegendes Haftklebeband 17. Das Haftklebeband 17 besteht aus einer Trägerfolie 16 mit einem darauf befindlichen doppelseitig klebenden Haftkleberfilm 15, der von einer Schutzfolie 14 bedeckt wird. Aus dem Haftklebeband 17 werden mit einem geeigneten Stanzwerkzeug 21 in regelmäßigen Abständen im Mittenbereich die kreisförmigen Öffnungen 6 und an den Rändern die abgerundeten Einschnitte 13, die als Klebeflächen für die Verbindung der Trägerelemente mit den Kartenkörpern nicht benötigt werden, ausgestanzt. Anschließend kann die Schutzfolie 14 vom Haftklebeband 17 entfernt und auf einer Rolle 22 aufgewickelt werden. Zur Beförderung des Haftklebebandes 17 können geeignete Führungsrollen (nicht dargestellt) vorgesehen werden, wobei die Stanzöffnungen 6 zum getakteten Transport und zur Positionierung des Haftklebebandes 17 genutzt werden können. Nach erfolgter Positionierung des Haftklebebands 17 wird mit Hilfe eines geeigneten Schneidwerkzeuges 23 der Haftkleberfilm 15 in regelmäßigen Abständen registergenau, d. h. entsprechend den Abmaßen der für die Verbindung der Trägerelemente mit den Kartenkörpern vorgesehenen Klebeflächen, durchtrennt, um die für den Einbau in die Kartenkörper vorgesehenen einzelnen Haftkleberelemente 5 zu erhalten. Das nach dem Schneidvorgang 23 erhaltene Haftklebeband 18 kann zur Lagerhaltung auf eine Rolle 24 aufgewickelt werden. Das Haftklebeband 18 kann aber auch zur Weiterverarbeitung direkt dem in Fig. 3 gezeigten Verfahrensschritt zugeführt werden.

Die Fig. 3 zeigt in einer schematisierten Darstellung den Einbau des Haftkleberelements 5 in die Aussparung 3 des Kartenkörpers 1. Das auf der Rolle 31 befindliche Haftklebeband 18 wird der Rolle 32 zugeführt und verbindet infolge dessen die beiden Rollen. Das Haftklebeband 18 und der Kartenkörper 1 werden derart zueinander positioniert, daß das Haftkleberelement 5 mittels des Stempels 30 von der Trägerfolie 16 direkt und paßgenau in die Aussparung 3 des Kartenkörpers eingesetzt und unter der Einwirkung eines vom Stempel ausgeübten Drucks fest und dauerhaft mit dem Kartenkörper 1 verbunden wird. Die nach dem Einbau der Haftkleberelemente 5 verbleibende Trägerfolie 16 wird auf die Rolle 32 aufgewickelt. Der Stempel 30 und die Rollen 31 und 32 können unabhängig voneinander in beiden Richtungen bewegt werden. Die Rollen 31 und 32 können sich im Falle einer zu hohen Belastung des Haftklebebandes 18 infolge des sich abwärts bewegenden Stempels 30 nach unten bewegen. Dadurch kann ein Reißen des Bandes infolge einer unzulässigen Belastung ausgeschlossen werden. Zur Verbesserung der Führung des Haftklebebandes 18 können auch geeignete Führungsrollen (nicht dargestellt) vorgesehen werden.

Um eine fertige Ausweiskarte zu erhalten, wird das in Fig. 1 dargestellte Trägerelement 10 mit einem nicht dargestellten Werkzeug in die Aussparung 2 des Kartenkörpers 1 eingebaut. Mit Hilfe des Haftkleberelements 5 und unter der Einwirkung von Druck kann das Trägerelement 10 fest und dauerhaft mit dem Kartenkörper 1 verbunden werden. In einer bevorzugten Ausführungsform ist das Haftkleberelement 5 mit einer Öffnung 6 versehen, die ein Verkleben der Gußmasse 8 mit dem Kartenkörper 1 im Bereich der Aussparung 4 verhindert. Die tiefere Aussparung 4 kann hierbei so bemessen werden, daß beim Einbau des Trägerelements 10 ein Hohlraum in der Aussparung 4 unterhalb der Gußmasse 8 verbleiben kann. Dies ermöglicht eine gewisse Bewegungsfreiheit des Trägerelements 10, insbesondere wirkt sich dies bei Biegebeanspruchungen der Karte 1 entlastend auf den integrierten Schaltkreis 7 aus. Selbstverständlich kann die im Ausführungsbeispiel zweistufig dargestellte Aussparung des Kartenkörpers einstufig ausgeführt werden, wenn die Form des Trägerelementes plättchen- bzw. scheibenförmig gewählt wird. In diesem Fall kann die Öffnung in dem Haftkleberelement entfallen, da die Verbindung des Trägerelements ganzflächig mit dem Boden der Aussparung erfolgen würde.

Die Fig. 4 zeigt eine weitere Ausführungsform eines Haftklebebandes. Aus dem Haftklebeband 50, das aus einer Trägerfolie, einem darauf angeordneten doppelseitigen Haftkleberfilm und wenigstens einer Schutzfolie besteht, können mit einem entsprechenden Stanzwerkzeug, wie dies bereits anhand Fig. 2 beschrieben wurde, die kreisförmigen Öffnungen 6 ausgestanzt werden.

Anschließend wird die Schutzfolie entfernt und der Haftkleberfilm mit einem geeigneten Schneidwerkzeug entsprechend der gewählten Kontur 52 der für die Verbindung der Trägerelemente mit den Kartenkörpern vorgesehenen Klebeflächen derart durchtrennt, daß die isolierten Haftkleberelemente 5 in den Bereichen 54 gitterförmig vom Haftkleberfilm umgeben sind. Im nächsten Arbeitsschritt wird der Haftkleberfilm in den Bereichen 54 gitterförmig abgezogen, um die auf der Trägerfolie in regelmäßigen Abständen verbleibenden einzelnen Haftkleberelemente 5 entsprechend dem in Fig. 3 dargestellten Verfahrensschritt in die Aussparungen der Kartenkörper einsetzen zu können. Diese Ausführungsform hat den Vorteil, daß die einzelnen Haftkleberelemente einfacher in die Aussparungen der Kartenkörper eingesetzt werden können.

Die Fig. 5 zeigt eine Weiterbildung des in Fig. 4 dargestellten Haftklebebandes 50. Das gemäß Fig. 4 hergestellte Haftklebeband 50 kann zusätzlich mit T-förmigen Entlastungsöffnungen 55 versehen werden, die aus der in den Bereichen 54 befindlichen Trägerfolie mittels eines geeigneten Stanzwerkzeuges gestanzt werden. Diese Ausführungsform hat den zusätzlichen Vorteil, daß die Haftkleberelemente 5 in tiefere Kartenhohlräume eingesetzt werden können, ohne daß durch starke Faltenbildung der Trägerfolie an den Enden der Hohlräume Verarbeitungsprobleme auftreten können. Diese Ausführungsform ist insbesondere bei Trägerelementen mit dickerem Randbereich und bei platten- bzw. scheibenförmigen Trägerelementen oder IC-Modulen vorteilhaft.

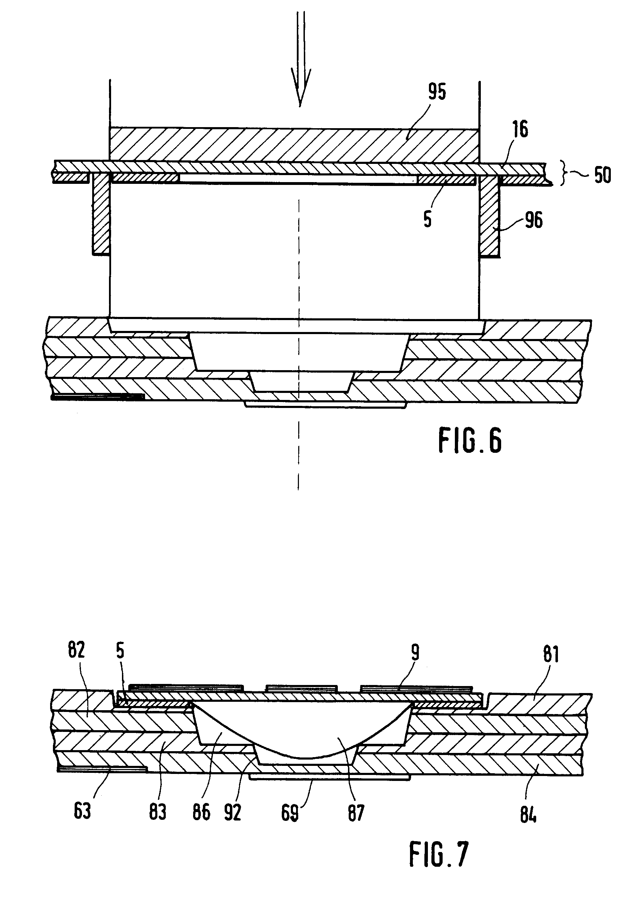

Das Haftkleberelement 5 kann auch mit einer Schutzfolie in eine Kartenaussparung eingesetzt werden (siehe dazu Fig. 6, Schnitt durch eine mehrschichtige Karte). Dazu wird das Haftklebeband 50 beispielsweise gemäß der Beschreibung zu Fig. 4 vorbereitet. Dieses Band, bestehend aus der Trägerfolie 16 und den darauf befindlichen, voneinander beabstandeten Haftkleberlementen 5, wird einem Stanzwerkzeug 95, 96 zugeführt. Dieses Werkzeug stanzt aus dem Band Elemente aus, die geringfügig größer sind als die Kontur der Haftkleberelemente 5. Die gestanzten Elemente werden direkt in die Aussparung der Karte eingesetzt. Bei dieser Vorgehensweise sind die eingesetzten Haftkleberelemente vor Verschmutzung geschützt. Somit können die Kartenkörper mit eingesetztem Haftkleberelement beliebig lange gelagert werden. Unmittelbar vor dem Einbau des Moduls wird die Schutzfolie entfernt.

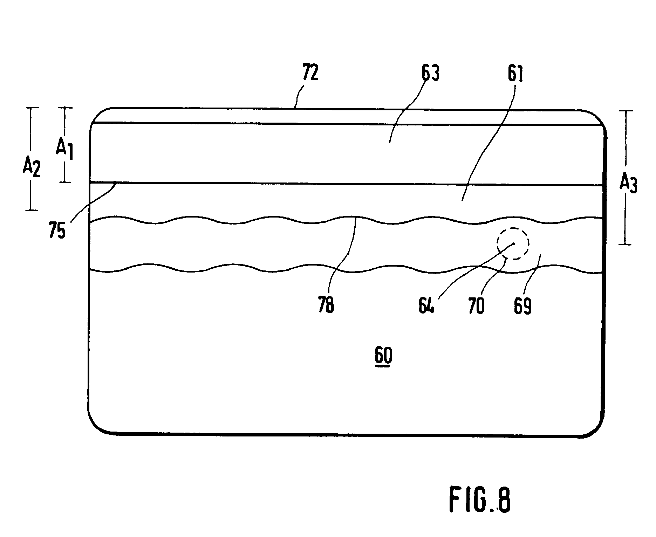

Eine Karte mit eingesetztem Tragelement ist in den Fig. 7 und 8 gezeigt. Eine weitere Besonderheit des in den Fig. 7 und 8 gezeigten und heute vielfach verwendeten Kartenkörpers besteht gemäß einer Weiterbildung der Erfindung darin, daß bei dem Kartenaufbau mit vorder- und rückseitig aufgebrachten Deckfolien der Boden der Aussparung für das Trägerelement in die transparente Deckfolie der Kartenrückseite hineinragt. Die mehrstufige Aussparung ist so ausgelegt, daß der in die rückseitige transparente Schicht ragende Bereich durch ein auf der Rückseite plaziertes Element, beispielsweise durch einen Unterschriftsstreifen, nicht sichtbar ist. Auf diese Weise wird unter anderem erreicht, daß bei größtmöglicher Ausnutzung der für die Aussparung zur Verfügung stehenden Kartendicke das optische Erscheinungsbild der Karte nicht beeinträchtigt wird.

Die in den Fig. 7 und 8 gezeigte Karte wird heute vielfach für Bankanwendungen benutzt. Sie besteht aus einem mehrschichtigen Kartenkörper 60, einem Magnetstreifen 63 und einem Unterschriftsstreifen 69. Der Kartenkörper ist aus vier gleich dicken Schichten 81, 82, 83, 84 aufgebaut. Dabei werden die Vorder- und Rückseite der Karte durch transparente Schichten 81, 84 gebildet. Die Zwischenschichten 82, 83 sind opak und im allgemeinen bedruckt.

Der Magnetstreifen 63 auf der Rückseite der Karte weist mehrere Schreib-/Lesespuren auf. In diesen Spuren sind die für die Anwendung der Karte benötigten Daten gespeichert. Der Magnetstreifen 63 liegt parallel zur oberen Kante der Karte, wobei der Abstand Al zwischen der Längskante 72 der Karte und der unteren Kante 75 des Magnetstreifens durch eine ISO-Norm vorgegeben ist. Der Unterschriftsstreifen besteht vorzugsweise aus einer dünnen Papierschicht und ist unterhalb des Magnetstreifens 63 mit einem Abstand A2 zur Längskante der Karte und parallel zu dieser Kante ausgerichtet gelegen.

Um ein fehlerfreies Schreiben und Lesen des Magnetstreifens zu gewährleisten und aufgrund Erwägungen ästhetischer Art empfiehlt es sich, einen gewissen Abstand zwischen der unteren Kante des Magnetstreifens und der oberen Begrenzung 78 des Unterschriftsstreifens 69 vorzusehen. Diese Erwägungen legen den Abstand A2 fest, der also deutlich größer als der Abstand Al ist. Es verbleibt somit ein nicht abgedeckter, transparenter Bereich 61 zwischen dem Magnetstreifen und dem Unterschriftsstreifen 69.

Das Chipmodul besteht aus einem Substrat, auf dem auf gegenüberliegenden Seiten die Kontaktflächen 9 und der integrierte Schaltkreis 7 angeordnet sind. Der integrierte Schaltkreis 7 und die Verbindungsleitungen vom Schaltkreis zu den Kontaktflächen (in der Figur nicht gezeigt) sind zum Schutz von einer Gußmasse 87 umgeben. In den Kartenkörper ist zur Aufnahme des Chipmoduls eine mehrstufige Aussparung eingefräst. Die Stufe in der Vorderseite des Kartenkörpers dient als Klebefläche für das Substrat des Chipmoduls, die zwei verbleibenden Stufen begrenzen eine Aussparung 86, die die Gußmasse aufnimmt.

Üblicherweise werden für den Einbau in den Kartenkörper Chipmodule verwendet, bei denen der integrierte Schaltkreis zu einem auf einem Substrat befindlichen Kontaktlayout zentral angeordnet ist. Dieser Aufbau erleichtert nicht nur die Montage des integrierten Schaltkreises und dessen Ummantelung mit einer Gußmasse, der Aufbau ist auch bezüglich der nicht vermeidbaren Biegebelastungen, die auf das Modul einwirken, vorteilhaft.

Da die Lage des Konaktlayouts auf der Kartenoberfläche durch eine ISO-Norm vorgegeben ist, ist damit auch bei Verwendung eines Chipmoduls mit zentral angeordnetem integrierten Schaltkreis das Zentrum der Aussparung bezogen auf die Kartenkanten definiert. In der Fig. 8 ist der Boden der Aussparung strichliert dargestellt. Der Abstand des Zentrums der Aussparung von der oberen Kartenkante ist mit A3 bezeichnet.

Der Einbau von Chipmodulen, bei denen der integrierte Schaltkreis und damit die Gußmasse zentral zum Kontaktlayout liegt, erfordert eine tiefe Aussparung, die vorzugsweise rotationssymmetrisch zum Zentrum 64 ist. Der tiefste Bereich dieser Aussparung ragt aufgrund des speziellen Kartenaufbaus der gebräuchlichen Karten in die transparente Rückseite 60, so daß die eher membranartige Bodenaussparung ausschließlich aus transparentem Material besteht. Wird die transparente Membran, die rotationssymmetrisch zum Zentrum 64 ausgebildet ist, zu groß gewählt, ist sie nicht vollständig vom Unterschriftsstreifen 69 abgedeckt. Vielmehr liegt ein Teil der Membran im transparenten Bereich 61 zwischen Magnetstreifen 63 und Unterschriftsstreifen 69, so daß die Gußmasse des Chipmoduls zu sehen ist, wenn man auf die Rückseite der Karte schaut. Dies beeinträchtig den optisch ästhetischen Eindruck der Karte. Um der Karte mit integriertem Chipmodul einen optisch einwandfeien Eindruck zu verleihen, ist die Membran in ihren Ausmaßen also maximal so auszubilden, daß die Umfangslinie 70 vollständig von dem Unterschriftsstreifen abgedeckt wird, und zwar auch dann, wenn die Membran mit einem schmalen Bereich des welligen und von Karte zu Karte in der Lage unterschiedlich plazierten Unterschriftsstreifens zusammenfällt.

Andererseits sollte die Aussparung derart gestaltet sein, daß zwischen den Wandungen der Aussparung und der Gußpille 87 ein Hohlraum verbleibt. Dieser Hohlraum kann dazu genutzt werden, Fertigungstoleranzen aufzunehmen. Darüber hinaus verbessert ein Hohlraum die mechanischen Eigenschaften des Moduls gegen Biegebelastungen der Karte.

Um einerseits die vorteilhaften Eigenschaften der Aussparung 86 optimal ausnutzen zu können und andererseits der Karte mit integriertem Chipmodul ein einwandfreies optisches Erscheinungsbild zu verleihen, wird der untere Teil oder Boden der Aussparung 86 so bemessen, daß er einerseits möglichst groß und rotationssymmetrisch ist, aber andererseits vollständig von dem Unterschriftsstreifen abgedeckt wird. Dies wird dadurch erreicht, daß der Übergang 92 vom zweiten Stufenplateau zum Boden der Aussparung zumindest im Bereich der transparenten Schicht vollständig von dem Unterschriftsstreifen abgedeckt wird. In diesem Fall ist nämlich sowohl der in der transparenten Schicht liegende Teil des Übergangs als auch die Membran selbst, deren Umrandung durch den Übergang festgelegt wird von der Rückseite der Karte nicht zu sehen.

Es sei abschließend erwähnt, daß die Form des Chipmoduls und die Form der Aussparung nur beispielhaft gewählt sind. Beliebige andere Formen sind denkbar. Alle denkbaren Formen sollten lediglich die Bedingung erfüllen, daß der in der transparenten Rückseite liegende Bereich der Aussparung vom Unterschriftsstreifen oder einem anderen abdeckenden Element verdeckt wird.

## Patentansprüche

1. Verfahren zum Einbau eines Trägerelementes mit wenigstens einem auf einem Substrat angeordneten integrierten Schaltkreis, wobei das Trägerelement mit Hilfe eines Haftkleberelements (5) in einer Kartenaussparung (2) mit einem Kartenkörper (1) unter Einwirkung von Druck verbunden wird, mit folgenden Verfahrensschritten:
- Zuführen eines Haftklebebandes (17, 14, 15, 16) in Form von Endlosmaterial, bestehend aus einem auf einer Trägerfolie (16) angeordneten doppelseitig klebenden Haftkleberfilm (15), der von einer Schutzfolie (14) bedeckt wird;
- Konfektionieren der Haftkleberelemente (5) aus dem Haftkleberfilm (15) des Haftklebebandes (17; 14, 15, 16) mittels eines Schneidwerkzeuges und Entfernen der Schutzfolie (14) vom Haftklebeband (18; 15, 16);
- Transferieren eines der Haftkleberelemente (5) in die Aussparung (3) des Kartenkörpers (1) mittels eines geeigneten Stempels (30) und Abziehen der Tragerfolie vom Haftkleberelement;
- Zuführen eines aus einem Substrat bestehenden Trägerfilms mit den darauf montierten integrierten Schaltkreisen (7) in Form von Endlosmaterial, wobei die integrierten Schaltkreise (7) zum besseren Schutz von einer Gußmasse (8) umgeben sein können;
- Ausstanzen des Trägerelementes (10) aus dem Trägerfilm und Einbau in die Aussparung (2) des Kartenkörpers (1).

2. Verfahren nach Anspruch 1, **gekennzeichnet** durch folgende, das Konfektionieren der Haftkleberelemente betreffende Verfahrensschritte:
- Ausstanzen der zum Verbinden der Trägerelemente mit den Kartenkörpern (1) als Klebeflächen nicht benötigten Bereiche des Haftklebebandes (18);
- Entfernen der Schutzfolie (14) vom Haftklebeband (17) und Aufwickeln auf einer Rolle(22);
- registergenaues Durchtrennen des Haftkleberfilms (15) in regelmäßigen Abständen entsprechend den Abmaßen der für die Verbindung der Trägerelemente mit den Kartenkörpern vorgesehenen Klebeflächen mittels eines Schneidwerkzeuges, um die einzelnen Haftkleberelemente (5) zu erhalten.

3. Verfahren nach Anspruch 1, **gekennzeichnet** durch folgende, das Konfektionieren der Haftkleberelemente (5) betreffende Verfahrensschritte:
- Ausstanzen der zum Verbinden der Trägerelemente mit den Kartenkörpern (1) als Klebeflächen gegebenenfalls nicht benötigten Bereiche des Haftklebebandes (15);
- Entfernen der Schutzfolie (14) vom Haftklebeband (17) und Auf-wickeln auf einer Rolle (22);
- Durchtrennen des Haftkleberfilms (15) entsprechend der Kontur der für die Verbindung der Trägerelemente mit den Kartenkörpern (1) vorgesehenen Klebeflächen mittels eines Schneidwerkzeuges, derart, daß diese von einem Gitter umgeben sind;
- Entfernen des Gitters, um die auf der Trägerfolie (16) in regelmäßigen Abständen isoliert verbleibenden einzelnen Haftkleberelemente (5) zu erhalten.

4. Verfahren nach Anspruch 3, dadurch **gekennzeichnet**, daß nach Entfernen des gitterförmigen Haftkleberfilms in die Trägerfolie des Haftklebebandes (15) zwischen den isolierten Haftkleberelementen (5) Tförmige Entlastungsöffnungen (55) gestanzt werden.

5. Verfahren nach Anspruch 2 oder 3, dadurch **gekennzeichnet**, daß in das Haftklebeband im Mittenbereich kreisförmige Öffnungen (6) und/oder an den Rändern Einschnitte (13) gestanzt werden.

6. Verfahren nach Anspruch 5, wobei die kreisförmigen Stanzöffnungen (6) zum getakteten Transport und zur Positionierung des Haftklebebandes (18) genutzt werden.

7. Verfahren nach Anspruch 1, dadurch **gekennzeichnet**, daß das Haftkleberelement (5) gemeinsam mit einem entsprechend konturierten Teil der Trägerfolie (16) als Schutzfolie in die Aussparung eingesetzt wird.

8. Halbzeug in Form eines Kartenkörpers (1), das zur Aufnahme eines Trägerelementes (10) mit wenigstens einem integrierten Schaltkreis (7) mit einer Aussparung (2) versehen ist, wobei in der Aussparung (2) ein Haftkleberelement (5) angeordnet ist.

9. Halbzeug in Form eines Kartenkörpers (1) nach Anspruch 8, wobei die Aussparung (2) eine zweistufige Aussparung ist, die aus einer ersten Aussparung (3) und einer innerhalb der ersten Aussparung (3) angeordneten tieferen zweiten Aussparung (4) besteht und auf den Schulterbereichen der tieferen Aussparung (4) das Haftkleberelement (5) angeordnet ist, das im Bereich der tieferen Aussparung (4) eine Öffnung (6) aufweist.

10. Halbzeug in Form eines Kartenkörpers (1) nach Anspruch 9, wobei die Öffnung (6) eine kreisförmige Form hat.

11. Halbzeug nach Anspruch 8, dadurch **gekennzeichnet,** daß daß Haftkleberelement durch eine Schutzschicht abgedeckt ist.

12. Halbzeug nach Anspruch 8 in Form eines genormten Kartenkörpers (1) vorbestimmter Dicke mit einer Vorder- und einer Rückseite, das auf der Vorderseite zur Aufnahme des Trägerelements (10) mit wenigstens einem integrierten Schaltkreis (7) mit einer mehrstufigen Aussparung (2) versehen ist, dadurch **gekennzeichnet**, daß
- der genormte Kartenkörper (1) mehrere Schichten aufweist, wobei die innenliegenden Schichten aus opakem, die außenliegenden Schichten aus transparentem Material (60) sind,
- die mehrstufige Aussparung (2) an vorbestimmter Position so gestaltet ist, daß der tiefste Bereich der Aussparung in die transparente Schicht ragt,
- rückseitig ein abdeckendes Element, beispielsweise in Form eines Unterschriftsstreifen (69), vorhanden ist,
- die mehrstufige Aussparung (2) so ausgebildet ist, daß der in die rückseitige transparente Schicht (60) ragende Bereich der Aussparung durch das rückseitige Element abgedeckt ist.

13. Halbzeug nach Anspruch 12, dadurch **gekennzeichnet**, daß der Kartenkörper (1) vier gleich dicke Schichten aufweist.

14. Halbzeug nach Anspruch 12, dadurch **gekennzeichnet**, daß der Kartenkörper (1) auf der Rückseite einen Magnetstreifen (63) aufweist und daß das abdeckende Element einen vorbestimmten Abstand zum Magnetstreifen hat.

15. Halbzeug nach Anspruch 12, wobei das Trägerelement (10) auf einem Substrat angeordnete Kontaktflächen (9) und wenigstens den integrierten Schaltkreis (7), der mit einer Gußmasse (8) vergossen ist, enthält, dadurch **gekennzeichnet,** daß
- die mehrstufige Aussparung (2) an vorbestimmter Position eine dreistufige Aussparung ist, wobei die erste Stufe (3) als Klebefläche für das Substrat dient und die durch die zweite und dritte Stufe begrenzte Aussparung zur Aufnahme der Gußmasse (8) dient,
- der tiefste Bereich der Aussparung in die transparente Schicht (60) ragt und daß der in die transparente Schicht ragende Teil der Aussparung vollständig durch das Element abgedeckt ist.

## Claims

1. A method for incorporating a carrier element with at least one integrated circuit disposed on a substrate, the carrier element being connected with a card body (1) in a recess (2) in the card with the aid of a contact adhesive element (5) under the action of pressure, comprising the following method steps:
- feeding a contact adhesive tape (17, 14, 15, 16) in the form of endless material, comprising a double-sided contact adhesive film (15) disposed on a carrier film (16) and covered by a protective film (14);
- fabricating the contact adhesive elements (5) from the contact adhesive film (15) of the contact adhesive tape (17; 14, 15, 16) by means of a cutting tool and removing the protective film (14) from the contact adhesive tape (18; 15, 16);
- transferring one of the contact adhesive elements (5) into the recess (3) in the card body (1) by means of a suitable die (30) and removing the carrier film from the contact adhesive element;
- feeding a carrier film comprising a substrate with the integrated circuits (7) mounted thereon in the form of endless material, whereby the integrated circuits (7) can be surrounded for better protection by a casting compound (8);
- stamping the carrier element (10) out the carrier film and incorporating it in the recess (2) in the card body (1).

2. The method of claim 1, characterized by the following method steps relating to the fabrication of the contact adhesive elements:
- stamping out the areas of the contact adhesive tape (18) not required as adhesive surfaces for connecting the carrier elements with the card bodies (1);
- removing the protective film (14) from the contact adhesive tape (17) and winding it onto a roll (22);
- cutting the contact adhesive film (15) at regular intervals in exact register in accordance with the dimensions of the adhesive surfaces provided for the bond between the carrier elements and the card bodies by means of a cutting tool to obtain the individual contact adhesive elements (5).

3. The method of claim 1, characterized by the following method steps relating to the fabrication of the contact adhesive elements (5):
- stamping out the areas of the contact adhesive tape (15) possibly not required as adhesive surfaces for connecting the carrier elements with the card bodies (1);
- removing the protective film (14) from the contact adhesive tape (17) and winding it onto a roll (22);
- cutting the contact adhesive film (15) in accordance with the contour of the adhesive surfaces provided for the bond between the carrier elements and the card bodies (1) by means of a cutting tool such that the adhesive surfaces are surrounded by a lattice;
- removing the lattice to obtain the individual contact adhesive elements (5) remaining isolated on the carrier film (16) at regular intervals.

4. The method of claim 3, characterized in that T-shaped relief openings (55) are stamped into the carrier film of the contact adhesive tape (15) between the isolated contact adhesive elements (5) after the latticed contact adhesive film is removed.

5. The method of claim 2 or 3, characterized in that circular openings (6) are stamped in the contact adhesive tape in the center area and/or indents (13) are stamped at the edges.

6. The method of claim 5, wherein the circular stamped openings (6) are utilized for clocked transport and for positioning of the contact adhesive tape (18).

7. The method of claim 1, characterized in that the contact adhesive element (5) is inserted into the recess together with an accordingly contoured part of the carrier film (16) as a protective film.

8. A semifinished product in the form of a card body (1) that is provided with a recess (2) for taking up a carrier element (10) with at least one integrated circuit (7), a contact adhesive element (5) being disposed in the recess (2).

9. The semifinished product in the form of a card body (1) of claim 8, wherein the recess (2) is a two-step recess comprising a first recess (3) and a deeper second recess (4) disposed within the first recess (3), and the contact adhesive element (5) having an opening (6) in the area of the deeper recess (4) is disposed on the shoulder areas of the deeper recess (4).

10. The semifinished product in the form of a card body (1) of claim 9, wherein the opening (6) has a circular shape.

11. The semifinished product of claim 8, characterized in that the contact adhesive element is covered by a protective layer.

12. The semifinished product of claim 8 in the form of a standardized card body (1) of predetermined thickness with a front and a back, provided on the front with a multistep recess (2) for taking up the carrier element (10) with at least one integrated circuit (7), characterized in that
- the standardized card body (1) has several layers, the inside layers consisting of opaque material and the outside layers of transparent material (60),
- the multistep recess (2) is formed at a predetermined position such that the deepest area of the recess protrudes into the transparent layer,
- a covering element, for example in the form of a signature stripe (69), is present on the back,
- the multistep recess (2) is formed such that the area of the recess protruding into the transparent layer (60) on the back is covered by the element on the back.

13. The semifinished product of claim 12, characterized in that the card body (1) has four equally thick layers.

14. The semifinished product of claim 12, characterized in that the card body (1) has a magnetic stripe (63) on the back, and the covering element is spaced a predetermined distance from the magnetic stripe.

15. The semifinished product of claim 12, the carrier element (10) containing contact surfaces (9) disposed on a substrate and at least the integrated circuit (7) that is cast with a casting compound (8), characterized in that
- the multistep recess (2) at a predetermined position is a three-step recess, the first step (3) serving as an adhesive surface for the substrate and the recess limited by the second and third steps serving to take up the casting compound (8),
- the deepest area of the recess protrudes into the transparent layer (60), and the part of the recess protruding into the transparent layer is completely covered by the element.

## Revendications

1. Procédé de montage d'un élément de support avec au moins un circuit de commutation intégré, disposé sur un substrat, l'élément de support étant relié, à l'aide d'un élément autoadhésif (5), dans un évidement de carte (2), à un corps de carte (1), sous l'effet de la pression, présentant les étapes de procédé suivantes consistant :
- à introduire une bande autoadhésive (17, 14, 15, 16) sous la forme d'un matériau continu, constitué d'un film autoadhésif (15) collant à double face, disposé sur une feuille support (16) et couvert d'une feuille de protection (14);
- à confectionner les éléments autoadhésifs (5) à partir du film autoadhésif (15) de la bande autoadhésive (17; 14, 15, 16) au moyen d'un outil de découpage et à enlever la feuille de protection (14) de la bande autoadhésive (18; 15, 16);
- à transférer l'un des éléments autoadhésifs (5) dans l'évidement (3) du corps de carte (1) au moyen d'un poinçon (30) approprié et à retirer par traction la feuille support de l'élément autoadhésif;
- à introduire un film support constitué d'un substrat avec les circuits intégrés de commutation (7) montés dessus et se présentant sous la forme de matériau continu, les circuits intégrés de commutation pouvant être entourés par une masse de moulage (7) dans le but d'améliorer la protection;
- à découper par matriçage l'élément de support (10) à partir du film support et à le placer dans l'évidement (3) du corps de carte (1).

2. Procédé selon la revendication 1, caractérisé par les étapes de procédé suivantes, concernant la confection des éléments autoadhésifs et consistant :
- à découper par matriçage les zones de la bande autoadhésive (18) qui ne sont pas nécessaires pour assurer la liaison des éléments de support avec les corps de carte (1) à titre de surfaces collantes;
- à retirer la feuille de protection (14) de la bande autoadhésive (17) et à l'enrouler sur un rouleau (22);
- à séparer, avec une précision de repérage, le film autoadhésif (15) en des espacements réguliers, de manière correspondante aux dimensions des surfaces adhésives prévues pour assurer les liaisons des éléments de support aux corps de carte, au moyen d'un outil de découpage, pour obtenir les éléments autoadhésifs individuels (5).

3. Procédé selon la revendication 1, caractérisé par les étapes de procédé suivantes, concernant la confection des éléments autoadhésifs (5) et consistant :
- à découper par matriçage les zones de la bande autoadhésive (15), qui ne sont pas nécessaires le cas échéant pour assurer la liaison des éléments de support, aux corps de carte (1), à titre de surfaces adhésives;
- à retirer la feuille de protection (14) de la bande autoadhésive (17) et à l'enrouler sur un rouleau (22);
- à séparer le film autoadhésif (15) de manière correspondante au contour des surfaces adhésives prévues pour assurer la liaison des éléments de support aux corps de carte (1), au moyen d'un outil de découpage, de manière que ces surfaces adhésives soient entourées par une grille;
- à enlever la grille, pour obtenir les éléments autoadhésifs individuels (5) qui subsistent de façon isolée selon des espacements réguliers sur la feuille support (16).

4. Procédé selon la revendication 3, caractérisé en ce qu'après enlèvement du film autoadhésif sous forme de grille en découpe par matriçage dans la feuille support de la bande autoadhésive (15), entre les éléments autoadhésifs isolés des ouvertures de décharge (55) en forme de T.

5. Procédé selon la revendication 2 ou 3, caractérisé en ce que des ouvertures (6) de forme circulaire et/ou des entailles (13) ménagées sur les bords, sont découpées par matriçage dans la zone médiane dans la bande autoadhésive.

6. Procédé selon la revendication 5, dans lequel on utilise les ouvertures matricées (6) de forme circulaire pour le transport cadencé et le positionnement de la bande autoadhésive (18).

7. Procédé selon la revendication 1, caractérisé en ce que l'élément autoadhésif (5) est inséré conjointement avec une partie de contour correspondant de la feuille support (16), à titre de feuille de protection, dans l'évidement.

8. Produit semi-fini se présentant sous la forme d'un corps de carte (1) doté d'un évidement (2) pour recevoir un élément de support (10) ayant au moins un circuit de commutation intégré (7), un élément autoadhésif(5) étant disposé dans l'évidement (2).

9. Produit semi-fini se présentant sous la forme d'un corps de carte (1) selon la revendication 8, l'évidement (2) étant un évidement à deux niveaux, constitué d'un premier évidement (3) et d'un deuxième évidement (4) plus profond disposé à l'intérieur du premier évidement (3) et dans lequel produit l'élément autoadhésif (5), qui, dans la zone de l'évidement plus profond (4), présente une ouverture (6), est disposé sur les zones d'épaulement de l'évidement plus profond (4).

10. Produit semi-fini sous la forme d'un corps de carte (1) selon la revendication 9, dans lequel l'ouverture (6) présente une forme circulaire.

11. Produit semi-fini selon la revendication 8, caractérisé en ce que l'élément autoadhésif est recouvert par une couche de protection.

12. Produit semi-fini selon la revendication 8, sous la forme d'un corps de carte (1) normalisé ayant une épaisseur prédéterminée, avec une face avant et une face arrière qui est dotée d'un évidement (2) multiétagé pour recevoir l'élément de support (10) comportant au moins un circuit de commutation intégré (7), caractérisé en ce que
- le corps de carte normalisé (1) présente plusieurs couches, les couches intérieures étant réalisées en un matériau opaque, tandis que les couches externes sont constituées d'un matériau transparent (60),
- l'évidement multiétagé (2) étant réalisé en une position prédéterminée de telle manière que la zone la plus profonde de l'évidement pénètre dans la couche transparente,
- sur la face arrière est prévu un élément recouvrant, par exemple sous la forme d'une bande de signature (69),
- l'évidement multiétagé (2) est réalisé de telle manière que la zone pénétrant dans la couche transparente (60) de la face arrière de l'évidement soit recouverte par l'élément de face arrière.

13. Produit semi-fini selon la revendication 12, caractérisé en ce que le corps de carte (1) présente quatre couches de même épaisseur.

14. Produit semi-fini selon la revendication 12, caractérisé en ce que le corps de carte (1) présente sur la face arrière une bande magnétique (63), et en ce que l'élément recouvrant est situé à une distance prédéterminée vis-à-vis de la bande magnétique.

15. Produit semi-fini selon la revendication 13, dans lequel l'élément de support (10) comprend des surfaces au contact (9) disposées sur un substrat et au moins le circuit de commutation intégré (7), moulé avec une masse de moulage (8), caractérisé en ce que
- l'évidement multiétagé (2) dans une position prédéterminée est un évidement à trois étages, le premier étage (3) servant de face de collage pour le substrat et l'évidement délimité par le deuxième et le troisième niveau servant à recevoir la masse de moulage (8),
- la zone la plus profonde de l'évidement pénètre dans la couche transparente (60), et en ce que la partie pénétrante dans la couche transparente de l'évidement est complètement recouverte par l'élément.
